# FASCICULE DE BREVET EUROPEEN

(11) **EP 3 086 972 B1**
(45) Date de publication et mention de la délivrance du brevet: **10.03.2021**
(21) Numéro de dépôt: 14835482.2
(22) Date de dépôt: 19.12.2014
(51) Int. Cl.: B60K 6/46, B60K 15/07, B60L 1/00, B60W 10/18, B60W 10/08, B60W 10/26, B60W 10/30, B60W 10/06

(54) **VÉHICULE COMPORTANT UN GROUPE ÉLECTROGÈNE**
FAHRZEUG MIT EINEM ELEKTRISCHEN GENERATORSATZ
VEHICLE COMPRISING AN ELECTRICITY GENERATOR SET

(30) Priorité: 23.12.2013 FR 1363478; 02.04.2014 FR 1452928
(43) Date de publication de la demande: 02.11.2016
(73) Titulaire: ENGIE, 92400 Courbevoie (FR); France Craft, 91350 Grigny (FR)
(72) Inventeur: BORDELANNE, Olivier, 60520 La Chapelle en Serval (FR); COLLING, Gerard, 95290 L'lsle Adam (FR); ALBIN, Franck, 69700 Montagny (FR); CHEVREAU, Marc, 91350 Grigny (FR)
(74) Mandataire: Novagraaf Technologies
(86) Numéro de dépôt international: PCT/FR2014/053475
(87) Numéro de publication internationale: WO 2015/097387

(56) Documents cités:
- EP-A1- 0 125 320
- EP-A2- 1 398 201
- DE-A1- 10 107 023
- DE-A1-102007 051 362
- DE-A1-102012 001 174
- US-A1- 2011 169 448

## Description

### Domaine technique

La présente invention se rapporte à un véhicule électrique ou hybride comportant une batterie d'alimentation d'un moteur électrique pour l'entraînement du véhicule et optionnellement un groupe électrogène pour fournir de l'énergie électrique par une alimentation de prolongement.

### Etat de la technique

Les contraintes environnementales, la pollution urbaine, les tensions sur le pétrole et les carburants qui en dérivent, les prix des carburants traditionnels incitent aujourd'hui à trouver de nouvelles solutions de mobilité pour diminuer les impacts environnementaux et économiques des déplacements liés à la mobilité des personnes et des marchandises.

Aussi est-il nécessaire de pouvoir disposer de véhicules peu polluants et disposant d'une autonomie suffisante pour satisfaire les besoins de mobilité tout en diminuant l'impact de ces déplacements.

Il a déjà été proposé des véhicules électriques comportant une batterie d'alimentation d'un moteur électrique pour la motorisation du véhicule. La batterie est rechargée dans les périodes en dehors de l'utilisation du véhicule, par une connexion de recharge à un réseau électrique. Ces véhicules permettent de maîtriser la pollution au niveau du véhicule. Cependant, leur autonomie est encore relativement modeste.

Pour augmenter l'autonomie des véhicules électriques, il a été proposé de construire un véhicule hybride en équipant un véhicule électrique d'un prolongateur d'autonomie qui est en pratique un groupe électrogène fournissant un courant de recharge de la batterie. Le groupe électrogène est composé d'un moteur thermique entraînant un générateur électrique. Le moteur thermique peut fonctionner avec divers carburants, comme de l'essence, du gazole ou du gaz.

Le document EP-A-0 125 320 décrit un véhicule hybride comportant un moteur électrique d'entraînement du véhicule, une source électrique pour alimenter le moteur par au moins une alimentation de prolongement, comportant au moins un connecteur auxiliaire pour alimenter un organe électrique, et un dispositif de distribution recevant au moins une alimentation de prolongement. L'invention vise à fournir un véhicule hybride à prolongateur d'autonomie ayant des fonctions complémentaires.

### Description de l'invention

Avec ces objectifs en vue, l'invention a pour objet un véhicule électrique ou hybride comportant un moteur électrique d'entraînement du véhicule, une source électrique pour alimenter le moteur par au moins une alimentation de prolongement, le vehicule comportant au moins un connecteur auxiliaire pour alimenter un organe électrique, un dispositif de distribution recevant au moins une alimentation de prolongement et une information de connexion en provenance du connecteur auxiliaire indiquant la présence de l'organe électrique branché dans le connecteur auxiliaire, le dispositif de distribution comportant des moyens de commutation pour connecter alors le connecteur auxiliaire à au moins une des alimentations de prolongement disponibles.

La source d'alimentation électrique est choisi parmi, une batterie, un groupe électrogène, un connecteur de recharge et sont connectés respectivement au dispositif de distribution par une première alimentation de prolongement, une deuxième alimentation de prolongement et une troisième alimentation de prolongement.

Grâce à l'invention, on peut disposer à tout moment grâce au connecteur auxiliaire, en tout lieu et sans connexion au réseau de distribution d'électricité, d'une source d'électricité délivrant une puissance électrique capable d'alimenter un organe électrique. Un tel véhicule est destiné en particulier à l'usage des agents qui ont des besoins divers liés à l'utilisation d'équipements électriques ou électroportatifs dans des lieux ouverts, loin d'un réseau électrique fixe accessible. L'usage d'un groupe électrogène est particulièrement avantageux car le même groupe électrogène peut servir d'une part à la prolongation d'autonomie du véhicule électrique et d'autre part à fournir de l'électricité pour un usage externe. Le branchement est établi par exemple directement entre le groupe électrogène ou la batterie et l'organe électrique. Cependant, on peut envisager d'alimenter un convertisseur placé juste en amont du connecteur auxiliaire et qui fournit un type de courant et une tension adaptée vers le connecteur auxiliaire.

Le dispositif de distribution permet non seulement de puiser l'énergie électrique dans la source la plus disponible, mais également de limiter l'utilisation du connecteur auxiliaire pour préserver les réserves d'énergie.

De manière avantageuse, lorsque le véhicule est équipé d'un groupe électrogène, celui-ci comporte un réservoir de gaz pour alimenter le groupe électrogène en énergie. La combustion du gaz est peu polluante, même pour une installation immobile.

Selon un perfectionnement, le réservoir de gaz est amovible. On peut ainsi fournir une recharge de gaz rapidement.

De manière particulière, le connecteur auxiliaire est accessible depuis l'extérieur du véhicule. Il est ainsi facilement accessible pour des besoins à l'extérieur du véhicule.

Selon l'invention, le véhicule comporte un connecteur de recharge pour alimenter la batterie par une source de courant extérieure, le dispositif de distribution déconnectant la source de courant extérieure lorsque l'alimentation de prolongement de la batterie est connectée. La priorité est donnée à une alimentation par le groupe électrogène pour la recharge de la batterie. La commutation est réalisée de manière automatique dès que l'électricité est fournie par l'alimentation de prolongement.

Selon une disposition, le dispositif de distribution délivre une tension alternative au connecteur auxiliaire comprise entre 200V et 240V.

Selon une autre disposition, le dispositif de distribution comporte des moyens de régulation de la tension et des moyens de détection des besoins en tension de l'organe électrique, les moyens de régulation de la tension étant agencés pour délivrer une tension en fonction des besoins en tension de l'organe électrique détectés par les moyens de détection. On peut ainsi adapter automatiquement la tension délivrée en fonction de l'appareil connecté. Pour cela, le connecteur auxiliaire peut disposer de plusieurs fiches spécifiques adaptées à différentes normes.

L'invention a aussi pour objet un procédé de gestion d'énergie sur un véhicule hybride ou électrique comportant un moteur électrique d'entraînement du véhicule, et au moins une source électrique parmi, une batterie électrique, un groupe électrogène, caractérisé en ce que au moins une des sources électrique est reliée à un dispositif de distribution par une alimentation de prolongement, le dispositif de distribution connectant en outre une alimentation de prolongement à un connecteur auxiliaire destiné à alimenter un organe électrique lorsque l'organe électrique est branché dans le connecteur auxiliaire. Un connecteur de recharge alimente la batterie par une source de courant extérieure, et le dispositif de distribution déconnecte cette source lorsque l'alimentation de prolongement de la batterie est connectée.

Selon une disposition particulière, on commande la mise en route du groupe électrogène lorsqu'un organe électrique est connecté au connecteur auxiliaire, et on commande l'arrêt du groupe électrogène lorsqu'aucun organe électrique n'est connecté au connecteur auxiliaire et que la batterie ne sollicite pas de charge. Ainsi le groupe électrogène ne fonctionne que lorsque cela est nécessaire. La présence d'un organe électrique peut être détectée au niveau du connecteur auxiliaire par un renvoi d'information vers le dispositif de distribution.

Selon un perfectionnement, on commande en outre une arrivée de gaz vers le groupe électrogène pour l'alimenter en énergie de manière synchrone avec le démarrage ou l'arrêt du groupe électrogène. La commande de l'arrivée de gaz permet d'augmenter la sécurité du véhicule.

Selon un perfectionnement, on ne démarre pas le groupe électrogène si la pression dans le réservoir de gaz est inférieure à un seuil prédéterminé.

Selon un autre perfectionnement, on limite la vitesse du véhicule au-dessous d'un seuil prédéterminé lorsqu'un organe électrique est connecté au connecteur auxiliaire. Ainsi, il est possible de déplacer le véhicule lorsqu'un organe électrique est connecté. Cependant, la vitesse est limitée pour limiter les risques de la manœuvre et pour alerter également le conducteur du branchement encore opérationnel.

Selon un autre perfectionnement, le dispositif de distribution comporte des moyens de calcul et des moyens de stockage de données, ledit dispositif de distribution pouvant limiter l'utilisation du connecteur auxiliaire en fonction d'une mission préprogrammée.

Avantageusement, la programmation d'une mission permet ainsi de limiter l'utilisation du connecteur auxiliaire afin de garantir l'accomplissement de la mission. Une mission est définie au moins en fonction de paramètres choisis parmi : position du vehicule, distance parcourue depuis le dernier rechargement, charge de la batterie, réserve de gaz.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue schématique de dessus d'un véhicule hybride conforme à un mode de réalisation de l'invention ;
- la figure 2 est une vue d'un afficheur placé à l'intérieur du véhicule de la figure 1.

### DESCRIPTION DETAILLEE

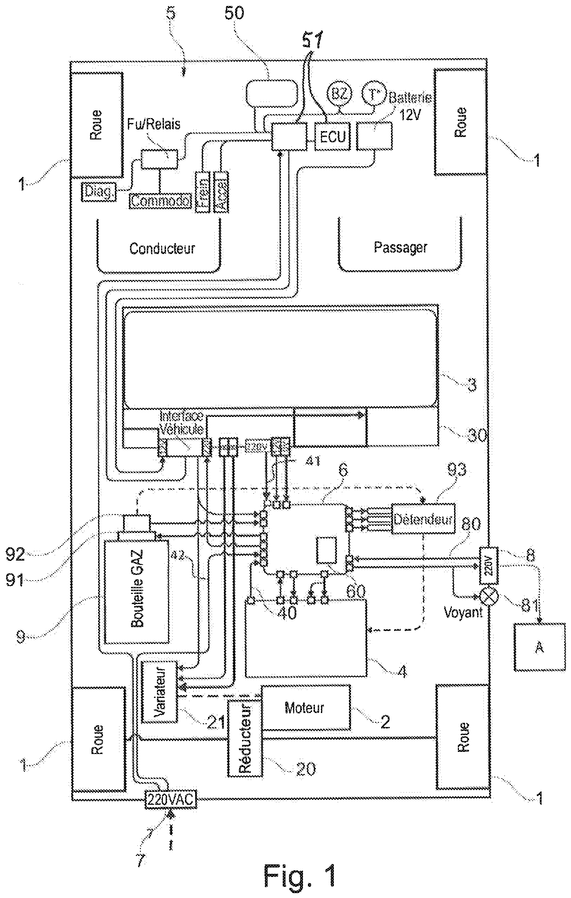

Un véhicule hybride selon un mode de réalisation de l'invention est représenté de manière schématique sur la figure 1. Le véhicule hybride comporte quatre roues 1, un moteur 2 électrique d'entraînement du véhicule par l'intermédiaire de deux des roues 1 et d'un réducteur 20, une batterie 3 électrique pour alimenter le moteur 2 et un groupe électrogène 4 pour fournir de l'énergie électrique par une premiere alimentation de prolongement 40. Il comporte en outre un tableau de bord 5 à l'intérieur d'un habitacle du véhicule et placé devant des sièges de conducteur et de passager. Le véhicule embarque également un réservoir 9 de gaz en forme de bouteille prévu pour l'alimentation du groupe électrogène 4.

Le véhicule comporte en outre un connecteur de recharge 7 pour recharger la batterie 3 et un connecteur auxiliaire 8 accessible depuis l'extérieur du véhicule pour alimenter un organe électrique A. Un dispositif de distribution 6 est prévu pour gérer des interconnexions entre les dispositifs du véhicule.

Le dispositif de commande 6 est alimenté par la batterie 3 par une deuxième alimentation de prolongement 41 et peut être également alimenté directement par le connecteur de recharge 7 par une troisième alimentation de prolongement 42. Chacune des alimentations de prolongement 40 à 42 permet d'offrir au dispositif de commande 6 des sources d'alimentation électrique pour alimenter électriquement le connecteur auxiliaire 8. Les alimentations de prolongements 40 à 42 pourront par la suite du texte être désignée par le terme « alimentation de prolongement » sans référence à leur source d'alimentation électrique car leur rôles respectifs sont identiques.

La batterie 3 est connectée à un variateur 21 auquel elle fournit une tension continue. Le variateur alimente le moteur 2 pour qu'il entraîne les roues 1 dans un sens ou dans l'autre en fonction de commandes en provenance du tableau de bord 5.

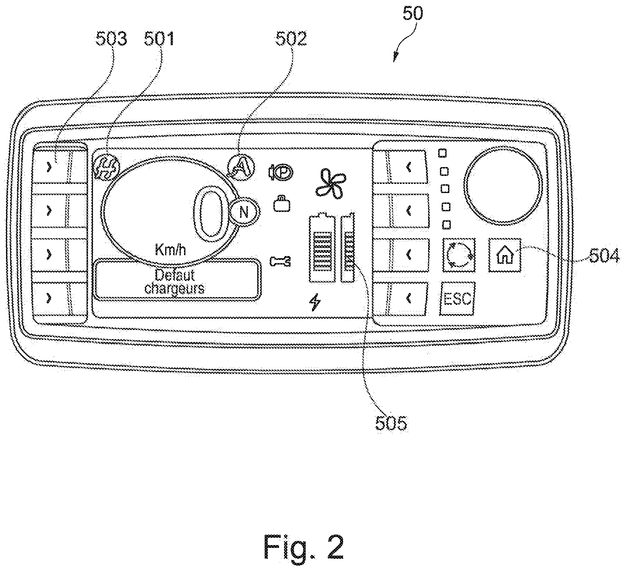

Le tableau de bord 5 comporte un afficheur 50, tel que représenté sur la figure 2. Outre l'affichage de fonctions classiques pour un véhicule terrestre, l'afficheur 50 comporte un indicateur d'état d'hybridation 501, indiquant lorsqu'il est actif que le groupe électrogène 4 alimente la batterie 3, et un indicateur d'état d'auxiliaire 502 qui indique lorsqu'il est actif qu'un organe électrique A est connecté au connecteur auxiliaire 8. Le tableau de bord 5 comporte en outre un premier bouton de commande 503 pour autoriser l'hybridation, c'est-à-dire l'alimentation de la batterie 3 par le groupe électrogène 4, et un deuxième bouton de commande 504 pour autoriser l'alimentation du connecteur auxiliaire 8. L'afficheur 50 comporte en outre une zone d'indication du niveau de charge 505 du réservoir 9 de gaz. L'afficheur 50 est relié à une unité de commande 51 du véhicule, qui pilote l'afficheur 50 et reçoit des informations sur l'état du véhicule, non détaillées ici. L'unité de commande 51 communique également avec d'autres composants du véhicule par l'intermédiaire d'un bus numérique, et en particulier avec le variateur 21 et le dispositif de distribution 6.

L'organe A peut être typiquement un outillage électroportatif comme un taille haie ou un chargeur de batterie 12V pour recharger des batteries.

Le connecteur de recharge 7 est relié au dispositif de distribution 6. Le dispositif de distribution 6 comporte un relais qui connecte sur commande le connecteur de recharge 7 à la batterie 3. Le relais est alimenté par la tension en provenance de l'alimentation de prolongement 40, de telle sorte que le connecteur de recharge 7 est déconnecté lorsque le groupe électrogène 4 fournit de l'électricité par l'alimentation de prolongement 40. La batterie 3 comporte son propre convertisseur 30 pour gérer la charge de ses éléments.

Selon un mode de réalisation particulier de l'invention, le connecteur de recharge 7 peut être connecté par le dispositif de distribution 6 au connecteur auxiliaire 8 de sorte qu'il est ainsi possible d'alimenter la batterie 3 pour la recharger et d'alimenter un équipement électrique extérieur, par exemple pour recharger un appareil electrique lorsque la batterie 3 du vehicule est en charge.

Le dispositif de distribution 6 comporte une unité de calcul 60 pour gérer les fonctions de distribution. Il reçoit en outre l'alimentation de prolongement 40 depuis le groupe électrogène 4 et une information de connexion 80 en provenance du connecteur auxiliaire 8 indiquant la présence de l'organe électrique A branché dans le connecteur auxiliaire 8. Le dispositif de distribution 6 comporte des moyens de commutation pour connecter le connecteur auxiliaire 8 à l'alimentation de prolongement 40. Le connecteur auxiliaire 8 comporte en outre un voyant 81 indiquant la présence d'une tension qui alimente le connecteur 8.

Le réservoir 9 de gaz qui peut être amovible est connecté à une électrovanne 91 qui permet de connecter ou non sur commande un réseau de gaz à bord du véhicule. Le réseau de gaz comporte ensuite un capteur de pression 92 envoyant une information de pression à l'unité de calcul 60, puis un détendeur 93 de gaz pour alimenter le groupe électrogène 4. Le détendeur 93 reçoit une commande de l'unité de commande 60 pour réguler l'arrivée de gaz. L'information de pression est envoyée sur le bus numérique pour qu'elle soit affichée dans la zone d'indication du niveau de charge 505.

### Fonctionnement

Lorsque le véhicule est en marche, sans alimentation de réseau connecté au connecteur de recharge 7, la batterie 3 donne une information sur son état de charge sur le bus numérique et, en fonction de ce niveau de charge, l'unité de calcul 60 peut commander le groupe électrogène 4 pour qu'il fournisse de l'énergie à la batterie 3 par l'alimentation de prolongement 40. Un appui sur le deuxième bouton 504 est reçu par l'unité de calcul 60 et autorise l'utilisation du connecteur auxiliaire 8. L'indicateur d'état auxiliaire 502 reste inactif.

Lorsque l'on connecte un organe électrique A dans le connecteur auxiliaire 8, l'information 80 en est reçue par l'unité de calcul 60. Si le groupe électrogène 4 est déjà démarré, et à condition que l'autorisation d'alimenter le connecteur auxiliaire 8 soit donnée par le deuxième bouton 504, l'unité de calcul 60 commande les moyens de commutation pour connecter le connecteur auxiliaire 8 à l'alimentation de prolongement 40. Elle envoie également une information à l'afficheur 50 pour que l'indicateur d'état auxiliaire 502 soit actif. Si le groupe électrogène 4 n'est pas démarré, elle commande l'ouverture de l'électrovanne 91 pour alimenter le groupe électrogène 4 en gaz. Si la pression de gaz est supérieure à un seuil prédéterminé, elle commande le groupe électrogène 4 pour obtenir son démarrage au préalable. Le groupe électrogène 4 fournit alors de l'énergie également à la batterie 3, par exemple sous la forme d'une tension de 230V en courant alternatif.

L'alimentation du connecteur 8 est réalisée sous une tension alternative comprise entre 200V et 240V. Dans une variante, non représentée, le dispositif de distribution 6 est muni de moyens de régulation de la tension et de moyens de détection des besoins en tension de l'organe A. L'unité de calcul 60 peut ainsi piloter les moyens de régulation pour adapter la tension délivrée au connecteur auxiliaire en fonction des besoins de l'organe A, par exemple dans une plage de tension de 6V à 220V, en alternatif ou en continu.

Lorsque l'organe électrique A est débranché, l'unité de calcul 60 en reçoit l'information. Si la batterie 3 n'a pas besoin d'être chargée plus, l'unité de calcul 60 pilote l'arrêt du groupe électrogène 4. Elle pilote également les moyens de commutation pour déconnecter l'alimentation de prolongement 40 et le connecteur auxiliaire 8. Elle pilote également l'électrovanne 91 pour couper l'arrivée de gaz au groupe électrogène 4.

Si le véhicule est connecté à une source de courant extérieure par le connecteur de recharge 7, et que le groupe électrogène 4 est à l'arrêt, la batterie 3 est alimentée par la source extérieure. Par contre, si le groupe électrogène 4 est en marche, la source extérieure est déconnectée et la batterie 3 est alimentée par le groupe électrogène 4.

Lorsque l'unité de calcul 60 reçoit l'information de la présence d'un organe électrique A branché au connecteur auxiliaire 8, elle envoie à l'unité de commande 51 du véhicule un ordre de limitation de la vitesse du véhicule au-dessous d'un seuil prédéterminé. Pour un véhicule terrestre, cette limitation est par exemple de 3 km/h. Cet ordre de limitation est supprimé dès que l'organe électrique A est déconnecté du connecteur auxiliaire 8.

On réalise ainsi la mutualisation d'un groupe électrogène pour étendre l'autonomie d'un véhicule électrique et simultanément pour délivrer un courant électrique afin d'alimenter des outillages électroportatifs.

Dans une variante de l'invention, le groupe électrogène 4 peut recevoir une commande d'allure. Par exemple, il peut comporter trois allures prédéterminées, une de mode réduit, en fournissant peu de puissance, une de mode nominal, avec une puissance et un rendement élevé, et une de mode maximal, avec une puissance d'un niveau supérieur au mode nominal mais avec un rendement peu favorable. L'unité de calcul 60 détermine et pilote les allures du groupe électrogène 4 en fonction de l'état de chargement de la batterie 3, de la demande de l'organe électrique A et du moteur 2. Elle prend en compte d'éventuelles alarmes en provenance du groupe électrogène 4 pour réduire l'allure, par exemple lorsqu'un échauffement important ou une autre anomalie est détecté.

L'invention n'est pas limitée au mode de réalisation qui vient d'être décrit. Elle peut aussi s'appliquer à un bateau. Le groupe électrogène peut être basé sur une pile à combustible. Le véhicule pourrait être équipé de plusieurs connecteurs auxiliaires, à l'extérieur ou à l'intérieur du véhicule.

Selon un autre mode de réalisation, le véhicule selon l'invention est un véhicule électrique, qui ne comprend pas de groupe électrogène. Dans ce mode de réalisation, la batterie 3 est reliée à l'organe de distribution 6 par une alimentation de prolongement 41.

Dans ce mode de fonctionnement, l'alimentation du connecteur extérieur 8 est effectuée à partir de la batterie 3 et non plus à partir du groupe électrogène 4. La batterie est donc fortement sollicitée par l'alimention du moteur du vehicule et par le connecteur extérieur. Selon l'invention, l'organe de distribution 6 est donc agencé pour limiter l'usage du connecteur extérieur selon des missions et non plus uniquement en fonction de la réserve de gaz. Le fonctionnement du véhicule décrit précédemment reste le même, si ce n'est, évidement, que l'organe de distribution 6 ne commande plus le groupe électrogène mais est agencé pour maitriser la charge de la batterie 3.

Une mission est définie comme un ensemble d'actions à effectuer dans un cadre donné et pour un objectif donné. Une mission est par exemple constituée d'un déplacement de la base jusqu'à un point donné puis l'exécution d'une tache et enfin le retour à la base. Une mission comporte ainsi une distance à parcourir à l'aller, une consommation d'énergie, et un retour.

Selon l'invention, le calculateur 60 de l'organe de distribution est agencé pour calculer et/ou stocker le trajet aller, estimer et/ou stocker le trajet retour et en déduire la quantité d'énergie nécessaire pour effectuer ce retour. L'organe de distribution est ainsi capable de limiter la consommation d'énergie par le connecteur auxiliaire afin de garantir le retour.

Parmi les paramètres qui définissent une mission, on peut citer de manière non exhaustive : la position du vehicule en temps réel ou non, la distance parcourue depuis le dernier rechargement, la charge de la batterie, la réserve de gaz

## Revendications

1. Véhicule électrique ou hybride comportant un moteur (2) électrique d'entraînement du véhicule, une source électrique (3, 4) pour alimenter le moteur (2) par au moins une alimentation de prolongement (40, 41, 42), comportant au moins un connecteur auxiliaire (8) pour alimenter un organe électrique (A), un dispositif de distribution (6) recevant au moins une alimentation de prolongement (40, 41, 42) et une information de connexion (80) en provenance du connecteur auxiliaire (8) indiquant la présence de l'organe électrique (A) branché dans le connecteur auxiliaire (8), le dispositif de distribution (6) comportant des moyens de commutation pour connecter alors le connecteur auxiliaire (8) à au moins une des alimentations de prolongement (40, 41, 42) disponibles, et comportant un connecteur de recharge (7) pour alimenter la batterie (3) par une source de courant extérieure, le dispositif de distribution (6) déconnectant la source de courant extérieure lorsque l'alimentation de prolongement (40) de la batterie (3) est connectée.

2. Véhicule hybride selon la revendication 1 **caractérisé en ce que** le véhicule comporte au moins une source d'alimentation électrique parmi, une batterie (3), un groupe électrogène (4), un connecteur de recharge (7) connectés respectivement au dispositif de distribution (6) par une première alimentation de prolongement (40), une deuxième alimentation de prolongement (41) et une troisième alimentation de prolongement (42).

3. Véhicule selon la revendication 1, **caractérisé en ce qu'**il comporte un réservoir (9) de gaz pour alimenter le groupe électrogène (4) en énergie.

4. Véhicule selon la revendication 3, dans lequel le réservoir (9) de gaz est amovible.

5. Véhicule selon l'une des revendications 1 à 3, dans lequel le connecteur auxiliaire (8) est accessible depuis l'extérieur du véhicule.

6. Véhicule selon l'une des revendications 1 à 5, dans lequel le dispositif de distribution (6) délivre une tension alternative au connecteur auxiliaire (8) comprise entre 200V et 240V.

7. Véhicule selon l'une des revendication 1 à 5 dans lequel le dispositif de distribution comporte des moyens de régulation de la tension et des moyens de détection des besoins en tension de l'organe électrique (A), les moyens de régulation de la tension étant agencés pour délivrer une tension en fonction des besoins en tension de l'organe électrique (A) détectés par les moyens de détection.

8. Procédé de gestion d'énergie sur un véhicule hybride ou électrique comportant un moteur (2) électrique d'entraînement du véhicule, et au moins une source électrique parmi, une batterie (3) électrique, un groupe électrogène (4), tel que au moins une des sources électrique est reliée à un dispositif de distribution (6) par une alimentation de prolongement (40, 41, 42), et en ce qu'un connecteur de recharge (7) alimente la batterie (3) par une source de courant extérieure, le dispositif de distribution (6) déconnectant la source de courant extérieure lorsque l'alimentation de prolongement (40) de la batterie (3) est connectée et connectant en outre une alimentation de prolongement (40) à un connecteur auxiliaire (8) destiné à alimenter un organe électrique (A) lorsque l'organe électrique (A) est branché dans le connecteur auxiliaire (8).

9. Procédé selon la revendication 8, selon lequel on commande la mise en route du groupe électrogène (4) lorsqu'un organe électrique (A) est connecté au connecteur auxiliaire (8), et on commande l'arrêt du groupe électrogène (4) lorsqu'aucun organe électrique (A) n'est connecté au connecteur auxiliaire (8) et que la batterie (3) ne sollicite pas de charge.

10. Procédé selon la revendication 9, selon lequel on commande en outre une arrivée de gaz vers le groupe électrogène (4) pour l'alimenter en énergie de manière synchrone avec le démarrage ou l'arrêt du groupe électrogène (4).

11. Procédé selon la revendication 10, selon lequel on ne démarre pas le groupe électrogène (4) si la pression dans le réservoir (9) de gaz est inférieure à un seuil prédéterminé.

12. Procédé selon l'une des revendications 9 à 11, selon lequel on limite la vitesse du véhicule au-dessous d'un seuil prédéterminé lorsqu'un organe électrique (A) est connecté au connecteur auxiliaire (8).

13. Procédé selon l'une des revendications 9 à 12 dans lequel le dispositif de distribution (6) comporte des moyens de calcul (60) et des moyens de stockage de données, ledit dispositif de distribution (6) pouvant limiter l'utilisation du connecteur auxiliaire en fonction d'une mission préprogrammée.

14. Procédé selon la revendication 13 dans lequel la mission est définie au moins en fonction de paramètres choisis parmi : position du véhicule, distance parcourue depuis le dernier rechargement, charge de la batterie, réserve de gaz.

## Patentansprüche

1. Elektro- oder Hybridfahrzeug, das einen Elektromotor (2) zum Antreiben des Fahrzeugs, eine Stromquelle (3, 4) zum Versorgen des Motors (2) durch einen Reichweitenverlängerungsversorgung (40, 41, 42) beinhaltet, mindestens einen Hilfsstecker (8) zum Versorgen eines elektrischen Organs (A) beinhaltend, eine Verteilungsvorrichtung (6), die mindestens eine Reichweitenverlängerungsversorgung (40, 41, 42) und eine Verbindungsinformation (80), von dem Hilfsstecker (8) kommend, aufnimmt, die das Vorhandensein des elektrischen Organs (A) anzeigt, das in dem Hilfsstecker (8) angeschlossen ist, wobei die Verteilungsvorrichtung (6) Umschaltmittel zum Verbinden des Hilfssteckers (8) mit mindestens einer der verfügbaren Reichweitenverlängerungsversorgungen (40, 41, 42) beinhaltet, und einen Ladestecker (7) zur Versorgung der Batterie (3) durch eine externe Stromquelle beinhaltet, wobei die Verteilungsvorrichtung (6) die externe Stromquelle trennt, wenn die Reichweitenverlängerungsversorgung (40) der Batterie (3) verbunden ist.

2. Hybridfahrzeug nach Anspruch 1, **dadurch gekennzeichnet, dass** das Fahrzeug mindestens eine Stromversorgungsquelle aus einer Batterie (3), einem Generator (4), einem Ladestecker (7), die jeweils durch eine erste Reichweitenverlängerungsversorgung (40), eine zweite Reichweitenverlängerungsversorgung (41) und eine dritte Reichweitenverlängerungsversorgung (42) mit der Verteilungsvorrichtung (6) verbunden sind.

3. Fahrzeug nach Anspruch 1, **dadurch gekennzeichnet, dass** es einen Gastank (9) beinhaltet, um den Generator (4) mit Energie zu versorgen.

4. Fahrzeug nach Anspruch 3, wobei der Gastank (9) abnehmbar ist.

5. Fahrzeug nach einem der Ansprüche 1 bis 3, wobei der Hilfsstecker (8) von außerhalb des Fahrzeugs zugänglich ist.

6. Fahrzeug nach einem der Ansprüche 1 bis 5, wobei die Verteilungsvorrichtung (6) dem Hilfsstecker (8) eine Wechselspannung liefert, die zwischen 200 V und 240 V enthalten ist.

7. Fahrzeug nach einem der Ansprüche 1 bis 5, wobei die Verteilungsvorrichtung Mittel zum Regeln der Spannung und Mittel zum Erkennen des Spannungsbedarfs des elektrischen Organs (A) beinhaltet, wobei die Mittel zum Regeln der Spannung ausgeführt sind, um eine Spannung in Abhängigkeit von dem von den Mitteln zum Erkennen erkannten Spannungsbedarf des elektrischen Organs (A) zu liefern.

8. Verfahren für Energiemanagement in einem Hybrid- oder Elektrofahrzeug, das einen Elektromotor (2) zum Antreiben des Fahrzeugs, und mindestens eine Stromquelle aus einer elektrischen Batterie (3), einem Generator (4) beinhaltet, sodass mindestens eine der Stromquellen durch eine Reichweitenverlängerungsversorgung (40, 41, 42) an eine Verteilungsvorrichtung (6) angeschlossen ist, und dadurch, dass ein Ladestecker (7) die Batterie (3) durch eine externe Stromquelle versorgt, wobei die Verteilungsvorrichtung (6) die externe Stromquelle trennt, wenn die Reichweitenverlängerungsversorgung (40) der Batterie (3) verbunden ist, und weiter eine Reichweitenverlängerungsversorgung (40) mit einem Hilfsstecker (8) verbindet, der dazu bestimmt ist, ein elektrisches Organ (A) zu versorgen, wenn das elektrische Organ (A) in dem Hilfsstecker (8) angeschlossen ist.

9. Verfahren nach Anspruch 8, wobei das Einschalten des Generators (4) angesteuert wird, wenn ein elektrisches Organ (A) mit dem Hilfsstecker (8) verbunden ist, und der Halt des Generators (4) angesteuert wird, wenn kein elektrisches Organ (A) mit dem Hilfsstecker (8) verbunden ist, und die Batterie (3) keine Ladung anfordert.

10. Verfahren nach Anspruch 9, wobei weiter eine Gaszufuhr zum Generator (4) angesteuert wird, um ihn in synchroner Form mit dem Start oder dem Halt des Generators (4) mit Energie zu versorgen.

11. Verfahren nach Anspruch 10, wobei der Generator (4) nicht gestartet wird, wenn der Druck in dem Gastank (9) geringer als ein vorbestimmter Schwellenwert ist.

12. Verfahren nach einem der Ansprüche 9 bis 11, wobei die Geschwindigkeit des Fahrzeugs unter einem vorbestimmten Schwellenwert begrenzt wird, wenn ein elektrisches Organ (A) mit dem Hilfsstecker (8) verbunden ist.

13. Verfahren nach einem der Ansprüche 9 bis 12, wobei die Verteilungsvorrichtung (6) Berechnungsmittel (60) und Datenspeichermittel beinhaltet, wobei die Verteilungsvorrichtung (6) die Verwendung des Hilfssteckers in Abhängigkeit von einer vorprogrammierten Aufgabe begrenzen kann.

14. Verfahren nach Anspruch 13, wobei die Aufgabe mindestens in Abhängigkeit von Parametern definiert wird, die ausgewählt sind aus: Position des Fahrzeugs, zurückgelegte Distanz seit der letzten Ladung, Ladung der Batterie, Gasreserve.

## Claims

1. Electric or hybrid vehicle including an electric motor (2) for driving the vehicle, an electrical source (3, 4) for powering the motor (2) by at least one range extender (40, 41, 42), including at least one auxiliary connector (8) for powering an electrical member (A), a distribution device (6) receiving at least one range extender (40, 41, 42) and connection information (80) from the auxiliary connector (8) indicating the presence of the electrical member (A) plugged into the auxiliary connector (8), the distribution device (6) including switching means for then connecting the auxiliary connector (8) to at least one of the available range extenders (40, 41, 42), and including a recharging connector (7) for powering the battery (3) by an external current source, the distribution device (6) disconnecting the external current source when the range extender (40) of the battery (3) is connected.

2. Hybrid vehicle according to claim 1 **characterised in that** the vehicle includes at least one power supply source from among a battery (3), a generating unit (4) and a recharging connector (7) connected respectively to the distribution device (6) by a first range extender (40), a second range extender (41) and a third range extender (42).

3. Vehicle according to claim 1, **characterised in that** it includes a gas tank (9) for supplying the generating unit (4) with energy.

4. Vehicle according to claim 3, wherein the gas tank (9) is removable.

5. Vehicle according to one of claims 1 to 3, wherein the auxiliary connector (8) is accessible from outside the vehicle.

6. Vehicle according to one of claims 1 to 5, wherein the distribution device (6) delivers an AC voltage to the auxiliary connector (8) of between 200 V and 240 V.

7. Vehicle according to one of claims 1 to 5 wherein the distribution device includes means for regulating the voltage and means for detecting the voltage requirements of the electrical member (A), the means for regulating the voltage being arranged to deliver a voltage based on the voltage requirements of the electrical member (A) detected by the detection means.

8. Method for managing energy on a hybrid or electric vehicle including an electric motor (2) for driving the vehicle, and at least one electrical source from among an electrical battery (3) and a generating unit (4), such that at least one of the electrical sources is connected to a distribution device (6) by a range extender (40, 41, 42), and in that a recharging connector (7) powers the battery (3) by an external current source, the distribution device (6) disconnecting the external current source when the range extender (40) of the battery (3) is connected and furthermore connecting a range extender (40) to an auxiliary connector (8) intended to power an electrical member (A) when the electrical member (A) is plugged into the auxiliary connector (8).

9. Method according to claim 8, whereby the starting of the generating unit (4) is requested when an electrical member (A) is connected to the auxiliary connector (8), and the stopping of the generating unit (4) is requested when no electrical member (A) is connected to the auxiliary connector (8) and the battery (3) is not seeking any charge.

10. Method according to claim 9, whereby a delivery of gas to the generating unit (4) is furthermore requested in order to supply it with energy synchronously with the starting or stopping of the generating unit (4).

11. Method according to claim 10, whereby the generating unit (4) is not started if the pressure in the gas tank (9) is below a predetermined threshold.

12. Method according to one of claims 9 to 11, whereby the speed of the vehicle is limited below a predetermined threshold when an electrical member (A) is connected to the auxiliary connector (8).

13. Method according to one of claims 9 to 12 wherein the distribution device (6) includes computing means (60) and data storage means, said distribution device (6) being able to limit the use of the auxiliary connector based on a pre-programmed task.

14. Method according to claim 13, wherein the task is defined at least based on parameters selected from: position of the vehicle, distance travelled since the last recharging, battery charge, gas reserve.
